# FASCICULE DE BREVET EUROPEEN

(11) **EP 2 032 013 B1**
(45) Date de publication et mention de la délivrance du brevet: **03.10.2012**
(21) Numéro de dépôt: 07766131.2
(22) Date de dépôt: 31.05.2007
(51) Int. Cl.: A47L 9/18, B01D 47/06, B01D 47/16

(54) **DISPOSITIF MÉLANGEUR GAZ-LIQUIDE**
VORRICHTUNG ZUM MISCHEN VON FLÜSSIGKEIT UND GAS
LIQIUD-GAS MIXING DEVICE

(30) Priorité: 02.06.2006 FR 0604955
(43) Date de publication de la demande: 11.03.2009
(73) Titulaire: Winddrop, Société À Responsabilité Limitée, 88600 Fremifontaine (FR)
(72) Inventeur: CURIEN, Gérard, F-88700 Housseras (FR)
(74) Mandataire: Rhein, Alain
(86) Numéro de dépôt international: PCT/FR2007/051364
(87) Numéro de publication internationale: WO 2007/141448

(56) Documents cités:
- EP-A2- 0 768 058
- EP-A2- 0 897 740
- US-A- 2 229 083
- US-A- 4 251 241

## Description

L'invention concerne un dispositif mélangeur gaz-liquide, formant clapet de sécurité, conçu apte à être incorporé dans une installation de nettoyage de gaz comportant un réservoir de liquide, une arrivée de gaz à nettoyer et une sortie par laquelle le flux gazeux s'évacue.

Elle concerne encore une installation de nettoyage de gaz muni d'un tel dispositif mélangeur gaz-liquide.

Elle concerne encore, en particulier, un aspirateur à filtration à eau muni d'un tel dispositif mélangeur gaz-liquide.

L'invention concerne le domaine du traitement de nettoyage des gaz, en particulier d'air, dans des applications industrielles ou domestiques.

Parmi ces dernières, les aspirateurs à filtration à eau traditionnels comportent un dispositif d'aspiration qui entraîne un flux d'air chargé de débris à travers une cuve contenant de l'eau. La filtration des impuretés s'effectue dans cette eau par barbotage, puis l'air est évacué vers l'extérieur après le passage dans un système séparateur eau-air et après la traversée du bloc d'aspiration.

Les aspirateurs à filtration à eau présentent plusieurs avantages notables par rapport aux aspirateurs traditionnels disposant de sacs filtrants, ou de filtres divers interposés dans le circuit de circulation de gaz, et notamment :
- De tels aspirateurs présentent une puissance d'aspiration constante pendant une période plus longue, selon les filtres complémentaires utilisés, par rapport aux aspirateurs traditionnels dans lesquels le média filtrant se colmate au fur et à mesure de l'utilisation et du remplissage du sac contenant les déchets.
- Un aspirateur à filtration à eau peut également, éventuellement, être dépourvu de tout filtre complémentaire à changer ou à nettoyer régulièrement.
- Un aspirateur à filtration à liquide ne comportant pas de sac l'utilisateur n'a donc pas de consommables à acheter et la maintenance de l'appareil est limitée.
- Les aspirateurs traditionnels ne permettent pas l'aspiration de l'eau et ne peuvent pas être utilisés pour cette fonction de récupération.
- L'emploi de désinfectant, de désodorisant ou d'huiles essentielles dans l'eau de barbotage de l'aspirateur à filtration à liquide amène des fonctionnalités supplémentaires par rapport aux aspirateurs traditionnels et notamment la possibilité d'éliminer les acariens.
- Un aspirateur à filtration à eau permet également d'humidifier l'air, ce qui peut parfois être recherché.

Les aspirateurs à filtration à eau permettent de nettoyer tous les sols, les tapis, les moquettes, les textiles, et similaires, de la même manière que les aspirateurs traditionnels disposant de filtres sous forme de sacs, de systèmes cycloniques, ou encore de filtres spécifiques.

Les principales difficultés techniques rencontrées pour la mise au point des aspirateurs à filtration à eau proviennent du fait que dans un premier temps un mélange très intime doit être réalisé entre l'air chargé de débris et l'eau de l'aspirateur, puis, lorsque lesdits débris sont piégés dans l'eau, une séparation aussi efficace que possible de l'eau doit être réalisée avant passage dans le module d'aspiration et avant rejet dans l'atmosphère de la pièce afin de débarrasser le flux gazeux des gouttelettes en suspension.

Par ailleurs l'aspirateur doit comporter une sécurité de trop-plein, afin d'éviter, lorsque l'aspirateur aspire de l'eau, que le remplissage complet du réservoir n'entraîne du liquide vers la sortie de l'aspirateur. Cette sécurité de trop plein est habituellement réalisée au moyen d'un corps flottant, souvent en forme de boule, emprisonné dans une cage.

Le document EP 0 768 058 décrit un tel dispositif, qui utilise dès l'entrée d'un flux d'air chargé de débris, l'effet Venturi pour humidifier ces débris avec de l'eau contenue dans une cuve, et qui comporte, sur la trajectoire de cet air chargé de débris et d'eau, avant son passage dans un séparateur air-eau et dans des moyens d'aspiration, un récipient muni d'un tel flotteur de trop-plein. Ce dispositif présente toutefois l'inconvénient de réagir trop rapidement dans un flux d'air de fort débit, ce qui provoque des arrêts intempestifs de l'aspirateur.

La présente invention a pour objectif d'optimiser l'efficacité du mélange entre un gaz chargé de débris et un liquide, pour l'amélioration de l'efficience d'une installation de nettoyage de gaz, notamment d'un aspirateur, notamment à filtration à liquide, tout en procurant un mécanisme de sécurité qui évite au liquide du réservoir de partir vers l'aspiration de gaz et le moteur lorsque ledit réservoir est plein.

La présente invention concerne un dispositif mélangeur gaz-liquide, formant clapet de sécurité, conçu apte à être incorporé dans une installation de nettoyage de gaz comportant un réservoir de liquide, une arrivée de gaz à nettoyer et une sortie par laquelle le flux gazeux s'évacue, ledit dispositif étant caractérisé par le fait qu'il présente:
- un tube coulissant autour de l'arrivée de gaz comportant un flotteur périphérique situé dans son extrémité inférieure et conçu apte à flotter dans ledit réservoir, ledit tube coulissant étant ouvert dans sa partie basse pour aspirer du liquide du réservoir par un effet venturi et créer un brouillard dans une zone de détente;
- une chambre de mélange interposée entre ledit tube coulissant et ladite sortie, et conçue apte à canaliser le flux dudit brouillard vers le fond dudit réservoir.

Selon une caractéristique de l'invention, ladite chambre de mélange est montée solidaire de ladite arrivée de gaz.

Selon une caractéristique de l'invention, ladite chambre de mélange est mobile et montée solidaire dudit tube coulissant.

Selon une caractéristique de l'invention, ladite chambre de mélange est mobile et montée solidaire de moyens d'amortissement fixés audit réservoir ou à ladite sortie, pour l'amortissement du mouvement de ladite chambre de mélange sous l'effet de variations du flux de gaz dans ladite arrivée de gaz.

Selon une caractéristique de l'invention, ladite sortie est constituée par une tuyère.

L'invention concerne encore une installation de nettoyage de gaz comportant, entre une conduite amont et une conduite aval, un réservoir de liquide, et au moins un tel dispositif mélangeur gaz-liquide.

Les avantages du dispositif mélangeur gaz-liquide formant clapet de sécurité selon l'invention sont multiples :
- l'effet venturi utilisé et les différentes variantes de conception du dispositif mélangeur permettent un excellent mélange gaz liquide avec formation de fines gouttelettes, un brassage important et donc une bonne efficacité de séparation des débris contenus dans le flux de gaz à nettoyer.
- une seule pièce, montée mobile, permet d'effectuer le mélange gaz liquide et fait office de clapet de sécurité pour le trop plein du réservoir.
- le dispositif est de taille réduite et autorise des débits de gaz élevés ce qui est favorable pour la construction d'une installation de nettoyage de gaz de taille réduite et d'efficacité importante.
- diverses configurations sont réalisables pour améliorer le mélange gaz liquide et il peut être réalisé, dans le même dispositif, la séparation liquide-gaz indispensable avant l'évacuation du gaz vers l'extérieur de l'installation de nettoyage de gaz, qui est alors très compacte.

D'autres caractéristiques et avantages de l'invention se dégageront de la description qui va suivre en regard des dessins annexés qui ne sont donnés qu'à titre d'exemples non limitatifs :
- la figure 1 est une vue en coupe d'un dispositif mélangeur gaz-liquide selon l'invention placé dans le réservoir d'une installation de nettoyage de gaz, dans l'exemple d'un aspirateur à filtration à eau;
- la figure 2 illustre une vue en coupe d'un dispositif mélangeur gaz-liquide selon une deuxième variante de l'invention ;
- la figure 3 illustre une vue en coupe d'un dispositif mélangeur gaz-liquide placé dans le réservoir d'une installation de nettoyage de gaz, dans l'exemple d'un aspirateur à filtration à eau, selon une troisième variante de l'invention ;
- la figure 4 est une représentation schématique de l'invention placée dans le réservoir incliné d'un aspirateur à filtration à eau.

L'invention concerne le domaine du traitement de nettoyage des gaz, en particulier d'air, dans des applications industrielles ou domestiques.

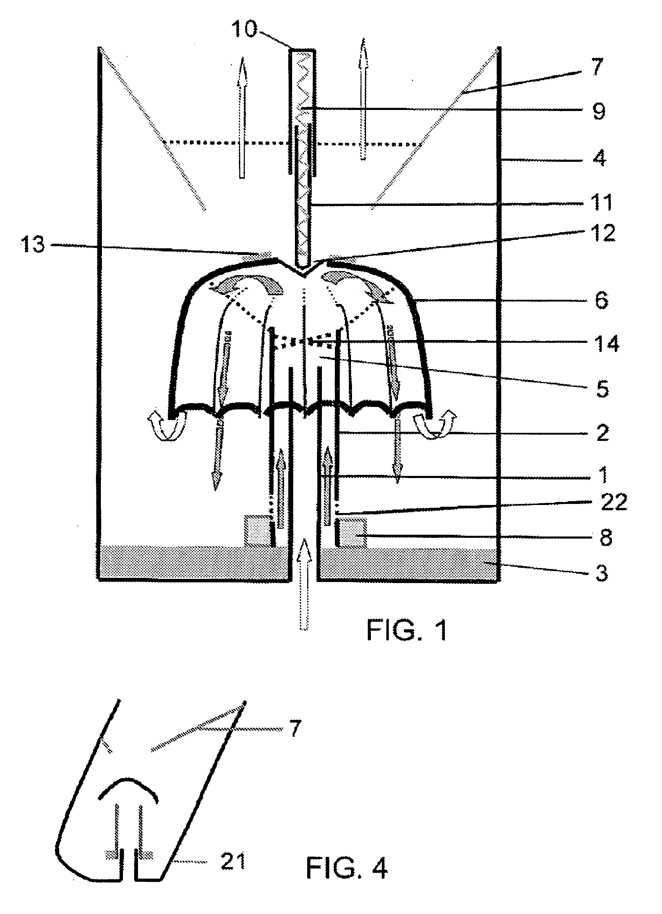

Une première variante d'un dispositif mélangeur gaz-liquide formant clapet de sécurité selon l'invention est illustrée sur la figure 1.

Le mélangeur gaz-liquide fonctionne selon le principe de l'effet venturi.

Un flux de gaz en provenance d'une conduite d'entrée d'une installation de nettoyage de gaz, par exemple d'un aspirateur à filtration à eau au niveau d'un suceur, arrive selon le sens de la flèche dans une arrivée 1, laquelle est de préférence de forme tubulaire. Ce flux de gaz engendre une dépression et une aspiration dans un tube 2 externe et concentrique à l'arrivée 1, le tube 2 étant en contact direct avec du liquide 3 contenu dans un réservoir 4, dans sa partie basse, il se produit une aspiration de liquide et son éjection dans le sens du flux de gaz dans une zone de détente 5. Ce tube 2 est coulissant autour de l'arrivée 1.

Une installation de nettoyage de gaz, notamment un aspirateur à filtration à eau, nécessite une quantité minimale du liquide 3 contenue dans le réservoir 4 pour que l'effet venturi soit possible. Cet effet, connu en soi, est réalisé dans le dispositif par le seul appel de gaz provoqué par le flux d'arrivée, par dépression différentielle.

Une chambre de mélange 6 est interposée entre le tube coulissant 2 et la sortie 7. Cette chambre de mélange 6 est conçue apte à canaliser le flux du brouillard, qui a été formé dans la zone de détente 5, vers le fond du réservoir 4. Elle comporte de préférence une concavité orientée vers le fond du réservoir 4.

Le mélange entre le flux pollué en provenance de la conduite d'entrée au niveau de l'arrivée 1, et le liquide aspiré dans le réservoir 4 s'effectue dans la zone de détente 5 et dans la chambre de mélange 6. Dans ces deux endroits le liquide est fragmenté en fines gouttelettes et intimement mélangée au gaz chargé de débris, lesquels débris se trouvent mouillés et piégés dans le brouillard formé, ils retombent alors dans le réservoir 4 où ils s'accumulent.

Afin que le dispositif de nettoyage du gaz soit le plus efficace possible il est important que le liquide soit en très fines gouttes et que le mélange avec le gaz soit propulsé le plus violemment possible.

Selon l'invention, et tel que cela est représenté sur la figure 1, le flux gazeux chargé de débris arrive par l'arrivée 1, passe dans le dispositif selon l'invention pour la réalisation du mélange gaz-liquide, puis peut s'évacuer par une sortie 7, placée dans la partie haute du réservoir 4. Sur l'évacuation de gaz il est généralement interposé entre la sortie et le tube de sortie un dispositif séparateur liquide-gaz de manière à ce que du liquide ne passe pas par le moteur et ne soit pas rejeté dans la pièce lors du fonctionnement de l'aspirateur.

Dans le cas de l'application à un aspirateur à filtration à liquide, celui-ci est apte à aspirer tous les types de dépôts et du liquide, dans ce dernier cas de fonctionnement le réservoir se remplit progressivement de liquide et il est indispensable de prévoir une sécurité de trop-plein pour interrompre la marche de l'aspirateur.

L'invention est remarquable en ce que la sécurité de trop-plein fonctionne en synergie avec le dispositif mélangeur à effet venturi précédemment décrit.

Le tube 2 externe à l'arrivée 1 de gaz est prévu coulissant et monté sur au moins un flotteur 8 périphérique, par ailleurs le dessus de la chambre de mélange 6 est conformé pour fermer de manière étanche la sortie 7 lorsque ladite chambre de mélange 6 arrive en position haute. Le flotteur 8 est situé à l'extrémité inférieure du tube 2, et est conçu apte à flotter dans réservoir 4.

La chambre de mélange 6 est conçue pour pouvoir s'opposer au passage du flux de gaz, soit par coopération avec la sortie 6, soit par coopération avec le tube 2, soit par coopération avec l'un et l'autre.

Le tube 2 coulisse entre une position basse correspondant au flotteur 8 posé dans le fond du réservoir 4 et une position haute correspondant au remplissage maximum en liquide 3 du réservoir 4.

Plus précisément, dans cette première variante, la chambre de mélange 6 est en forme de parapluie. La chambre de mélange 6 peut être, dans une première exécution, montée solidaire de l'arrivée 1 de gaz, et donc fixe. La chambre de mélange 6 peut aussi, dans une deuxième exécution, montée mobile, et, dans ce dernier cas, de préférence montée solidaire du tube coulissant 2. La montée du tube 2 rapproche alors le jet de liquide propulsé, et repousse l'enveloppe de la chambre de mélange 6, préférentiellement en forme de parapluie, vers la sortie 7. La forme en parapluie que peut adopter la chambre de mélange 6 permet l'écoulement, le long de nervures constituées par les alternances de concavité de la surface de la chambre de mélange 6, de faciliter l'écoulement le long de ces nervures.

Dans le cas d'une autre variante où la chambre de mélange 6 est fixée sur le tube 1, c'est alors le tube 2 flottant qui viendra, avec la montée du liquide récupéré, obturer le passage du gaz en le fermant par contact avec la forme en parapluie. Ce principe est particulièrement simple car il permet de supprimer la sortie et tout ressort de tension.

Dans le cas où la chambre de mélange 6 est solidaire du tube 2, lorsque l'appareil aspire du liquide et que le réservoir 4 se remplit, le flotteur 8 se déplace vers le haut et entraîne dans son mouvement l'ensemble formé par le tube 2 et la chambre de mélange 6. Lorsque le dessus de la chambre de mélange 6 arrive au contact de la partie basse de la sortie 7 l'écoulement du gaz est interrompu et l'installation de nettoyage de gaz s'arrête pour que la vidange du réservoir 4 soit effectuée.

L'enveloppe de la chambre de mélange 6, et donc le mélangeur gaz-liquide lui-même, forme ainsi un clapet de sécurité pour l'installation de nettoyage de gaz.

Afin que le flux de gaz ne provoque pas le blocage du clapet de sécurité de manière intempestive comme cela se produit sur les dispositifs de sécurité à flotteurs, il est prévu un moyen de contre-pression appuyant sur le dessus de la chambre de mélange 6.

Dans la version où la chambre de mélange 6 est mobile, elle est préférentiellement montée solidaire de moyens d'amortissement, qui sont fixés au réservoir 4 ou à la sortie 7, pour l'amortissement du mouvement de la chambre de mélange 6 sous l'effet de variations du flux de gaz dans l'arrivée de gaz 1.

Dans la variante, où le tube 2 vient en contact avec la surface, préférentiellement en parapluie, de la chambre de mélange 6, un tel dispositif d'amortissement, notamment sous l'effet de moyens de rappel élastique, est fixé entre le ou les flotteurs 8 et le fond de l'appareil. D'une manière générale, plus simplement encore, l'amortissement des à-coups liés aux variations de débit causées par l'utilisation de l'installation de nettoyage de gaz, peut être obtenu par une surcharge du poids de l'ensemble constitué par le flotteur 8 d'un volume plus conséquent et le tube 2, sans pour autant supprimer la flottabilité de l'ensemble coulissant qui n'agira alors qu'en dernier lieu.

Les moyens d'amortissement peuvent être constitués par des moyens de contre-pression, qui appuient sur le dessus de la chambre de mélange 6. Ces moyens de contre-pression sont de préférence constitués par un moyen presseur, par exemple sous forme d'un mécanisme à ressort, appuyant sur le dessus de la chambre de mélange 6. Un tel mécanisme est illustré sur la figure 1. Le moyen presseur peut se présenter sous forme d'un ressort 9 contenu dans un réceptacle 10 et relié à un doigt mobile 11 pouvant se déplacer dans le réceptacle. La force du ressort est suffisante pour que le flotteur reste toujours au contact du liquide et ajustée pour que la montée du liquide n'engendre pas l'immersion du flotteur 8. Ainsi, lorsque le réservoir se remplit de liquide le dessus de la chambre de mélange 6 appuie sur le doigt mobile 11 et repousse ce dernier vers le haut jusqu'au point de fermeture de la sortie 7.

L'avantageuse combinaison de ces différents moyens de pression et contre-pression, de flottaison, et de tension, est d'atténuer les à-coups de débit de gaz dus, dans le cas particulier d'un aspirateur, à la manipulation de sa rampe, qui lorsque celle-ci après avoir été obturée accidentellement, libère, sous l'effet de la dépression réalisée, une quantité d'air importante qui serait en mesure de faire agir le système d'obturation par une trop forte pression de l'air entrant. Ceci permet la montée de la chambre de mélange 6 sous l'effet du flotteur 8 lors du remplissage en liquide du réservoir 4.

Le doigt mobile 11 appuie de préférence au centre de la partie supérieure de la chambre de mélange 6 en un point 12 configuré pour que le dispositif reste bien en place dans le réservoir 4, c'est à dire sensiblement sur l'axe de l'arrivée 1 d'arrivée de gaz. Avantageusement ce point 12 se trouve en dépression par rapport à la surface externe de la chambre de mélange 6.

En variante il est envisageable de relier le doigt mobile 11 et la chambre de mélange 6 pour constituer un ensemble solidaire.

L'enveloppe constituant la chambre de mélange 6 peut être fixée de diverses façons, avec des moyens de maintien variés, sur le tube 2, sans sortir du cadre de l'invention.

En remplacement ou en complément d'un mécanisme à ressort, qui présente l'avantage d'un fonctionnement en amortisseur des à-coups de pression, il peut être envisagé d'employer des contrepoids 13 disposés sur la surface externe de la chambre de mélange 6. Diverses variantes peuvent être imaginées pour le contrepoids 13, par exemple sous forme d'une ou plusieurs masses rapportées, ou encore en ajustant la masse de la chambre de mélange 6 elle-même pour que la pression de gaz et les à-coups du flux gazeux n'engendrent pas de blocage intempestif de cette sécurité.

Avantageusement selon l'invention la partie inférieure du tube 2, placée immédiatement au dessus du flotteur 8, peut être prévue avec des perçages 22 favorisant le réglage de l'aspiration de liquide et donc de l'effet venturi. De tels perçages 22 engendrent des entrées de gaz et donc une diminution de l'aspiration de liquide. On peut ainsi jouer sur l'effet de propulsion du tube 2, dans la direction du flux de gaz, en jouant également sur le rapport entre le diamètre de ce tube 2 par rapport à celui du tube 1. Avantageusement, le dispositif selon l'invention comporte encore des moyens de réglage, qui sont conçus aptes à obturer de façon variable ces perçages 22. Ces moyens de réglages peuvent notamment consister en une bague montée sur le tube 2, et obturant plus ou moins, selon sa position angulaire ou longitudinale, les perçages 2, pour réguler le flux traversant ces perçages.

Selon l'invention il est avantageusement placé dans la zone de détente 5, ou dans la chambre de mélange 6, une hélice 14 qui favorise l'homogénéisation du gaz et du liquide. Cette hélice 14 peut être prévue fixe et donc apte à créer des turbulences dans le flux, ou mobile et entraînée par le courant gazeux de manière à homogénéiser le brouillard formé dans la zone de détente. L'hélice 14 est de préférence conçue apte à être entraînée en rotation, soit par le flux, soit par des moyens de motorisation.

Dans une réalisation préférée, cette hélice 14 comporte des pales de forme très concave permettant la reconcentration du brouillard en élément liquide. Elle est avantageusement placée au-dessus du tube coulissant 2 dans la chambre de mélange 6.

En remplacement ou en complément de l'hélice 14 il peut être envisagé de placer dans la chambre de mélange 6 une brosse 17 formée d'ensembles de poils. La brosse 17 est de préférence conçue apte à être entraînée en rotation, soit par le flux, soit par des moyens de motorisation, ou encore, avantageusement par une hélice 14 entraînée par le flux de gaz en mouvement, ou mue par des moyens de motorisation.

Afin de disposer d'une place suffisante pour l'hélice et/ou la brosse il peut être prévu de modifier la sortie de la chambre de détente 5, diverses variantes sont alors envisageables.

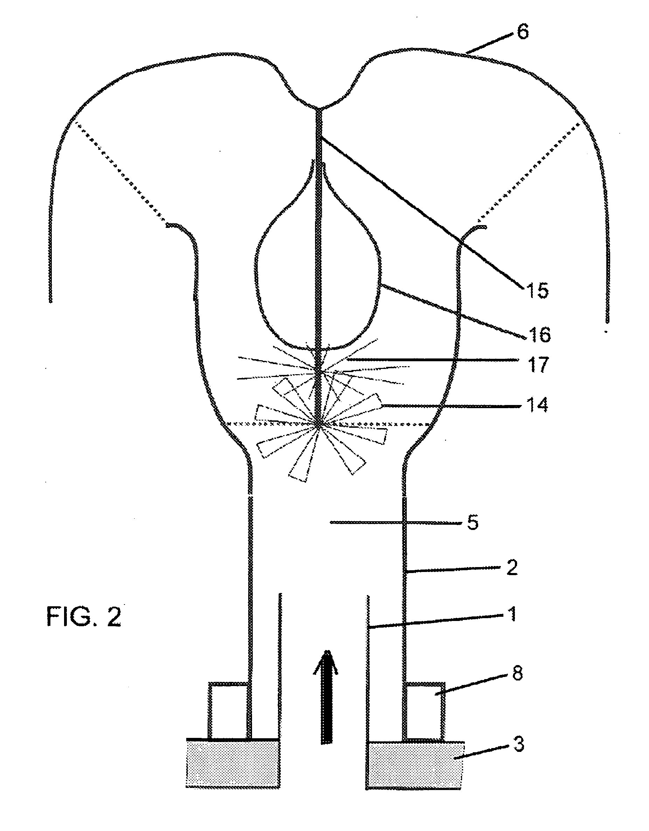

La figure 2 illustre une deuxième variante de l'invention dans laquelle la sortie de la chambre de détente 5 est aménagée avec une hélice 14 placée dans un évasement du tube 2. L'hélice 14 est montée sur un axe 15 qui autorise le mouvement de rotation par entraînement des pales dans le flux gazeux.

Afin que le débit de gaz ne soit pas modifié et que l'hélice 14 brasse efficacement le brouillard en provenance de la chambre de détente 5, il est prévu de placer dans l'évasement du tube 2 un noyau central 16 pour combler le supplément de volume engendré par ledit évasement, avec une section de passage du flux relativement uniforme. Ce maintien de la vitesse du flux d'air ainsi obtenu permet efficacement le rejet du mélange gaz-liquide obtenu.

La combinaison de l'hélice et/ou de la brosse avec le noyau central 16 occasionne une séparation du flux de gaz, une projection des gouttelettes vers la paroi périphérique de la partie évasée du tube et donc une séparation liquide-gaz rapide dans la chambre de mélange 6.

Pour centrifuger plus efficacement le brouillard, il peut être prévu de placer au-dessus de l'hélice 14 une brosse souple 17 formée d'ensemble de poils et actionnée en rotation, notamment par le flux gazeux au moyen de l'hélice 14. On notera à ce propos que, si l'entraînement d'une hélice 14 ou d'une brosse 17 est avantageusement effectué par l'action du flux de gaz, le recours à des moyens externes de motorisation est également envisageable, par exemple à l'aide d'un moteur électrique.

Dans la partie basse de la chambre de mélange 6, c'est à dire à la sortie de la zone de détente 5, il peut donc être envisagé différentes variantes avec une hélice 14 seule en rotation, ou maintenue fixe, une brosse 17 seule ou un ensemble hélice 14 et brosse 17 en rotation. Toutes ces possibilités sont comprises dans l'invention.

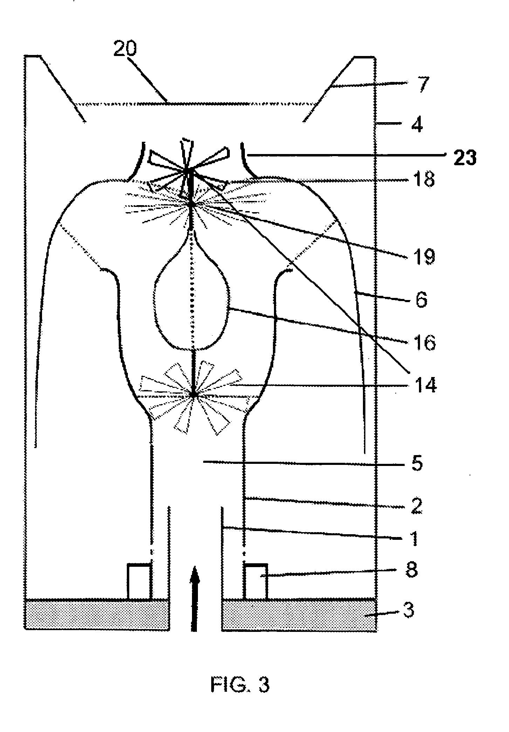

Une troisième variante illustrée sur la figure 3 consiste à modifier la partie supérieure de la chambre de mélange 6 en créant une ouverture 18 et en plaçant sous celle-ci un dispositif de séparation 19 liquide-gaz permettant l'évacuation du gaz, débarrassé du liquide, directement dans la sortie 7, sans passage par le réservoir 4 et le contournement de la chambre de mélange 6 comme cela se produisait dans les variantes précédentes.

Afin que le dessus de la chambre de mélange 6 fonctionne en clapet de sécurité, lorsque le réservoir 4 atteint son niveau de remplissage maximum, il est prévu une configuration de sortie 7 adaptée pour obturer l'ouverture 18, par exemple par la présence d'un disque 20 à la dimension de l'ouverture. Les bords de la chambre de mélange 6 appuient, comme dans les autres variantes, sur les bords inférieurs de la sortie 7. Cette configuration du disque 20 permet, en outre, de diminuer l'effet de succion au niveau de la sortie 7 par augmentation de la section de passage du flux d'air.

Plus précisément dans cette troisième variante une hélice 14 est disposée dans l'évasement du tube 2 et un séparateur liquide-gaz à brosse est placé dans la partie supérieure de la chambre de mélange 6 immédiatement sous l'ouverture 18. La partie supérieure de la chambre de mélange 6 est conformée pour coopérer avec une partie fixe portée par la sortie 7, en l'occurrence un disque 20, permettant l'obturation de l'évacuation de gaz lorsque le dispositif arrive en position haute sous l'action du remplissage en liquide du réservoir 4. Il est également possible d'inverser les positions relatives de l'hélice 14 et du séparateur liquide-gaz 19, de façon à éviter l'encrassement de l'hélice 14, selon la nature des débris transportés dans le gaz, et notamment dans le cas de débris organiques, cheveux, poils ou similaire, par une première séparation du gaz et du liquide sali au niveau du séparateur 19, sous l'effet de la force centrifuge lors de la rotation de ce dernier. A cet effet, l'hélice 14 est alors préférentiellement incluse dans une partie tubulaire 23 placée au-dessus du passage 18, et conçue apte à venir au contact de la partie 20.

Un dispositif mélangeur gaz-liquide formant clapet de sécurité et comportant un ensemble séparateur liquide-gaz, selon cette troisième variante, présente l'avantage de constituer un ensemble extrêmement compact, ce qui est particulièrement appréciable en utilisation sur un appareil ménager, bien adapté à un filtre sur une rampe d'aspirateur.

Les différentes variantes précédemment décrites peuvent être configurées pour s'adapter à un aspirateur comportant un réservoir incliné. Un tel réservoir 21 est représenté sur la figure 4 dans un schéma simplifié du dispositif. La partie inférieure du tube 1 peut être articulée à l'aide d'un flexible, le positionnement vertical étant obtenu à l'aide du ou des flotteurs 8 du tube 2.

Cette dernière représentation montre que le mélangeur gaz-liquide formant clapet de sécurité doit être disposé le plus possible à la verticale et que la configuration de la sortie 7 est nécessairement adaptée pour cette orientation du réservoir.

Différentes variantes de l'invention ont été décrites, il peut en outre être prévu d'autres combinaisons que celles énoncées, en fonction de la présence de contrepoids ou d'un dispositif presseur à ressort et en fonction de la configuration de la chambre de mélange. Ladite chambre de mélange peut être conformée de différentes manières pour l'écoulement de gaz à l'intérieur de celle ci et en direction de l'extérieur sans sortir du cadre de l'invention.

La forme de la chambre de mélange formant clapet de sécurité et la découpe de l'ouverture de la sortie permettant l'obstruction du flux de gaz lorsque le dispositif arrive en position haute peut être prévu dans une large plage de possibilités sans sortir du cadre de l'invention,. Bien évidemment les dimensions des différents éléments ainsi que les débits peuvent varier considérablement selon le type d'installation de nettoyage de gaz, notamment d'aspirateur, envisagé.

La chambre de mélange peut être prévue avec des nervures, des canaux, et de manière plus générale des surfaces de contact adaptées pour favoriser la condensation des gouttelettes chargées de débris et l'écoulement de celles-ci dans le réservoir.

Dans les différentes variantes présentées il peut être envisagé de placer un joint d'étanchéité sur la partie basse de la sortie ou sur le dessus de la chambre de séparation, sans sortir du cadre de l'invention.

De façon avantageuse, le dispositif selon l'invention comporte des moyens de rappel du tube coulissant 2 vers le fond du réservoir 4, par exemple sous forme d'un ressort ou d'un bandeau élastique.

De façon préférée, et tel que représenté sur les figures, la sortie 7 est constituée par une tuyère.

On notera, encore, que la présente description décrit l'invention sous forme d'un mélangeur gaz-liquide. Dans le cas particulier et courant des applications domestiques, le gaz est de l'air, et le liquide est de l'eau. Le mélangeur gaz-liquide selon l'invention est alors, avantageusement, constitué de matériaux résistant à la corrosion par oxydation.

L'invention concerne encore toute installation de traitement de nettoyage de gaz comportant, entre une conduite amont et une conduite aval, un réservoir de liquide, et au moins un tel dispositif mélangeur gaz-liquide.

Dans le cas particulier des applications domestiques, cette installation de traitement de gaz consiste en un appareil électro-ménager, en particulier un aspirateur à filtration à eau, comportant des moyens de génération d'un flux d'air, et comportant, entre une conduite amont et une conduite aval, un réservoir à eau, et au moins un tel dispositif mélangeur gaz-liquide.

## Revendications

1. Dispositif mélangeur gaz-liquide, formant clapet de sécurité, conçu apte à être incorporé dans une installation de nettoyage de gaz comportant un réservoir de liquide (4), une arrivée (1) de gaz à nettoyer et une sortie (7) par laquelle le flux gazeux s'évacue, ledit dispositif étant **caractérisé par le fait qu'**il présente:
- un tube (2) coulissant autour de l'arrivée (1) de gaz comportant un flotteur (8) périphérique situé dans son extrémité inférieure et conçu apte à flotter dans ledit réservoir (4), ledit tube coulissant (2) étant ouvert dans sa partie basse pour aspirer du liquide dudit réservoir (4) par un effet venturi et créer un brouillard dans une zone de détente (5);
- une chambre de mélange (6) interposée entre ledit tube coulissant (2) et ladite sortie (7), et conçue apte à canaliser le flux dudit brouillard vers le fond dudit réservoir (4).

2. Dispositif mélangeur gaz-liquide formant clapet de sécurité selon la revendication 1, **caractérisé par le fait que** ladite chambre de mélange (6) est montée solidaire de ladite arrivée (1) de gaz.

3. Dispositif mélangeur gaz-liquide formant clapet de sécurité selon la revendication 1, **caractérisé par le fait que** ladite chambre de mélange (6) est mobile et montée solidaire dudit tube coulissant (2).

4. Dispositif mélangeur gaz-liquide formant clapet de sécurité selon la revendication 1, **caractérisé par le fait que** ladite chambre de mélange (6) est mobile et montée solidaire de moyens d'amortissement fixés audit réservoir (4) ou à ladite sortie (7), pour l'amortissement du mouvement de ladite chambre de mélange (6) sous l'effet de variations du flux de gaz dans ladite arrivée (1) de gaz.

5. Dispositif mélangeur gaz-liquide formant clapet de sécurité selon la revendication 4, **caractérisé par le fait que** lesdits moyens d'amortissement sont constitués par des moyens de contre-pression, sous forme d'un dispositif à ressort (9), appuyant sur le dessus de ladite chambre de mélange.

6. Dispositif mélangeur gaz-liquide formant clapet de sécurité selon l'une des revendications précédentes **caractérisé par le fait que** le tube (2) coulisse entre une position basse correspondant au fond du réservoir (4) et une position haute correspondant au remplissage maximum en liquide (3) du réservoir (4).

7. Dispositif mélangeur gaz-liquide formant clapet de sécurité selon l'une des revendications précédentes **caractérisé par le fait que** le dessus de ladite chambre de mélange (6) est conformé pour fermer de manière étanche ladite sortie (7) lorsque ladite chambre de mélange (6) arrive en position haute.

8. Dispositif mélangeur gaz-liquide formant clapet de sécurité selon l'une des revendications précédentes **caractérisé par le fait que** la chambre de mélange (6) comporte au moins une hélice (14), conçue apte à être entraînée en rotation.

9. Dispositif mélangeur gaz-liquide formant clapet de sécurité selon l'une des revendications précédentes **caractérisé par le fait que** la chambre de mélange (6) comporte au moins une brosse (17) munie de poils, conçue apte à être entraînée en rotation.

10. Dispositif mélangeur gaz-liquide formant clapet de sécurité selon l'une des revendications précédentes **caractérisé par le fait que** la partie supérieure du tube (2) est évasée pour permettre le placement à cet endroit d'une hélice (14) et/ou d'une brosse (17) et dans lequel il est disposé un noyau central (16) dans ladite partie évasée permettant une séparation du flux de gaz sans perte de débit.

11. Dispositif mélangeur gaz-liquide selon l'une quelconque des revendications précédentes, **caractérisé par le fait qu'**il comporte des moyens de rappel dudit tube coulissant (2) vers le fond dudit réservoir (4).

12. Dispositif mélangeur gaz-liquide formant clapet de sécurité selon l'une des revendications précédentes **caractérisé par le fait qu'**il comporte des moyens de réglage conçus aptes à obturer de façon variable des perçages (22) que comporte, à sa partie inférieure et au-dessus dudit flotteur (8), ledit tube coulissant (2).

13. Dispositif mélangeur gaz-liquide formant clapet de sécurité selon l'une des revendications précédentes, **caractérisé par le fait que** ladite chambre de mélange (6) est conçue apte à coopérer avec ladite sortie (7) pour s'opposer au passage du gaz.

14. Dispositif mélangeur gaz-liquide formant clapet de sécurité selon l'une des revendications 1 à 13, **caractérisé par le fait que** ladite chambre de mélange (6) est conçue apte à coopérer avec ledit tube coulissant (2) pour s'opposer au passage du gaz.

15. Dispositif mélangeur gaz-liquide formant clapet de sécurité selon l'une des revendications précédentes, **caractérisé par le fait que** ladite chambre de mélange (6) est en forme de parapluie.

16. Dispositif mélangeur gaz-liquide formant clapet de sécurité selon l'une des revendications précédentes, **caractérisé par le fait que** ladite sortie (7) est constituée par une tuyère.

17. Installation de nettoyage de gaz comportant, entre une conduite amont et une conduite aval, un réservoir de liquide, et au moins un dispositif mélangeur gaz-liquide selon l'une quelconque des revendications 1 à 16.

18. Aspirateur à filtration à eau, comportant des moyens de génération d'un flux d'air, et comportant, entre une conduite amont et une conduite aval, un réservoir à eau, et au moins un dispositif mélangeur gaz-liquide selon l'une quelconque des revendications 1 à 16.

## Claims

1. Gas-liquid mixing device, forming a safety valve, designed capable of being incorporated into a gas-cleaning installation including a liquid tank (4), an inlet (1) for the gas to be cleaned and an outlet (7) through which the gas flow is evacuated, said device being **characterized in that** it has :
- a tube (2) sliding around the gas inlet (1) including a peripheral float (8) located in its lower end and designed capable of floating in said tank (4), said sliding tube (2) being open in its lower portion, in order to draw liquid from said tank (4) by a venturi effect and to create a mist in a pressure-relief zone (5) ;
- a mixing chamber (6) interposed between said sliding tube (2) and said outlet (7), and designed capable of conveying said mist flow towards the bottom of said tank (4).

2. Gas-liquid mixing device forming a safety valve according to claim 1, **characterized in that** said mixing chamber (6) is mounted integral with said gas inlet (1).

3. Gas-liquid mixing device forming a safety valve according to claim 1, **characterized in that** said mixing chamber (6) is movable and mounted integral with said sliding tube (2).

4. Gas-liquid mixing device forming a safety valve according to claim 1, **characterized in that** said mixing chamber (6) is movable and mounted integral with damping means fixed to said tank (4) or to said exit (7), for damping the movement of said mixing chamber (6) under the action of changes of the gas flow in said gas inlet (1).

5. Gas-liquid mixing device forming a safety valve according to claim 4, **characterized in that** said damping means are formed by counter-pressure means, in the form of a spring device (9), pressing on the top of said mixing chamber.

6. Gas-liquid mixing device forming a safety valve according to one of the preceding claims, **characterized in that** the tube (2) slides between a lower position corresponding to the bottom of the tank (4) and an upper position corresponding to the maximum filling with liquid (3) of the tank (4).

7. Gas-liquid mixing device forming a safety valve according to one of the preceding claims, **characterized in that** the top of said mixing chamber (6) is formed so as to tightly close said outlet (7) when said mixing chamber (6) arrives in the upper position.

8. Gas-liquid mixing device forming a safety valve according to one of the preceding claims, **characterized in that** the mixing chamber (6) includes at least one propeller (14), designed capable of being driven in rotation.

9. Gas-liquid mixing device forming a safety valve according to one of the preceding claims, **characterized in that** the mixing chamber (6) includes at least one brush (17) provided with bristles, designed capable of being driven in rotation.

10. Gas-liquid mixing device forming a safety valve according to one of the preceding claims, **characterized in that** the upper portion of the tube (2) is widened so as to allow placing at that location a propeller (14) and/or a brush (17) and in which a core (16) is arranged in said widened portion, which allows a separation of the gas flow without loss of flow-rate.

11. Gas-liquid mixing device according to any of the preceding claims, **characterized in that** it includes means for bringing back said sliding tube (2) towards the bottom of said tank (4).

12. Gas-liquid mixing device forming a safety valve according to one of the preceding claims, **characterized in that** it includes adjusting means designed capable of variably closing holes (22) said sliding tube (2) includes, in its lower portion and above said float (8).

13. Gas-liquid mixing device forming a safety valve according to one of the preceding claims, **characterized in that** said mixing chamber (6) is designed capable of cooperating with said outlet (7) in order to oppose the passage of gas.

14. Gas-liquid mixing device forming a safety valve according to one of claims 1 to 13, **characterized in that** said mixing chamber (6) is designed capable of cooperating with said sliding tube (2) in order to oppose the passage of gas.

15. Gas-liquid mixing device forming a safety valve according to one of the preceding claims, **characterized in that** said mixing chamber (6) is umbrella-shaped.

16. Gas-liquid mixing device forming a safety valve according to one of the preceding claims, **characterized in that** said outlet (7) is formed by a nozzle.

17. Gas-cleaning installation, including, between an upstream conduit and a downstream conduit, a liquid tank, and at least one gas-liquid mixing device according to any of claims 1 to 16.

18. Vacuum-cleaner with water filtering, including means for generating an air flow, and including, between an upstream conduit and a downstream conduit, a water tank, and at least one gas-liquid mixing device according to any of claims 1 to 16.

## Patentansprüche

1. Vorrichtung zum Mischen von Flüssigkeit und Gas, die ein Sicherheitsventil bildet, geeignet vorgesehen, um in eine Gasreinigungsanlage eingebaut zu werden, die einen Flüssigkeitsbehälter (4), einen Einlass (1) für das zu reinigende Gas und einen Auslass (7), über den der Gasstrom abgeführt wird, umfasst, wobei die besagte Vorrichtung **dadurch gekennzeichnet ist, dass** sie Folgendes aufweist:
- ein Gleitrohr (2) um den Gaseinlass (1) herum, der einen Umkreisschwimmer (8) umfasst, der sich in dessen unterem Ende befindet und geeignet vorgesehen ist, um in dem besagten Behälter (4) zu schwimmen, wobei das besagte Gleitrohr (2) in seinem unteren Teil offen ist, um Flüssigkeit aus dem besagten Behälter (4) durch einen Venturi-Effekt zu saugen und einen Mist in einem Entspannungsbereich zu bilden (5) ;
- eine Mischkammer (6), die zwischen dem besagten Gleitrohr (2) und dem besagten Auslass (7) angeordnet ist, und geeignet vorgesehen ist, um diesen Miststrom zu dem Boden des besagten Behälters (4) zu führen.

2. Vorrichtung zum Mischen von Flüssigkeit und Gas, die ein Sicherheitsventil bildet, nach Anspruch 1, **dadurch gekennzeichnet, dass** die besagte Mischkammer (6) fest mit dem besagten Gaseinlass (1) verbunden montiert ist.

3. Vorrichtung zum Mischen von Flüssigkeit und Gas, die ein Sicherheitsventil bildet, nach Anspruch 1, **dadurch gekennzeichnet, dass** die besagte Mischkammer (6) beweglich und fest mit dem besagten Gleitrohr (2) verbunden montiert ist.

4. Vorrichtung zum Mischen von Flüssigkeit und Gas, die ein Sicherheitsventil bildet, nach Anspruch 1, **dadurch gekennzeichnet, dass** die besagte Mischkammer (6) beweglich und fest mit an dem besagten Behälter (4) oder an diesem Auslass (7) befestigten Dämpfungsmitteln zum Dämpfen der Bewegung der besagten Mischkammer (6) unter der Wirkung von Gasstromänderungen in dem besagten Gaseinlass (1) verbunden montiert ist.

5. Vorrichtung zum Mischen von Flüssigkeit und Gas, die ein Sicherheitsventil bildet, nach Anspruch 1, **dadurch gekennzeichnet, dass** die besagten Dämpfungsmittel aus Gegendruckmitteln in der Form von einer Federvorrichtung (9) bestehen, die auf die Oberseite der besagten Mischkammer drücken.

6. Vorrichtung zum Mischen von Flüssigkeit und Gas, die ein Sicherheitsventil bildet, nach Anspruch 1, **dadurch gekennzeichnet, dass** das Rohr (2) zwischen einer unteren Position, die dem Boden des Behälters (4) entspricht, und einer oberen Position, die der maximalen Füllung mit Flüssigkeit (3) des Behälters (4) entspricht.

7. Vorrichtung zum Mischen von Flüssigkeit und Gas, die ein Sicherheitsventil bildet, nach einem der vorgehenden Ansprüche, **dadurch gekennzeichnet, dass** die Oberseite der besagten Mischkammer (6) gestaltet ist, um den besagten Auslass (7) hermetisch zu schließen, wenn die besagte Mischkammer (6) in der oberen Position gelangt.

8. Vorrichtung zum Mischen von Flüssigkeit und Gas, die ein Sicherheitsventil bildet, nach einem der vorgehenden Ansprüche, **dadurch gekennzeichnet, dass** die Mischkammer (6) wenigstens eine Luftschraube (14) umfasst, die geeignet vorgesehen ist, um in Drehung angetrieben zu werden.

9. Vorrichtung zum Mischen von Flüssigkeit und Gas, die ein Sicherheitsventil bildet, nach einem der vorgehenden Ansprüche, **dadurch gekennzeichnet, dass** die Mischkammer (6) wenigstens eine mit Borsten versehene Bürste (17) umfasst, die geeignet vorgesehen ist, um in Drehung angetrieben zu werden.

10. Vorrichtung zum Mischen von Flüssigkeit und Gas, die ein Sicherheitsventil bildet, nach einem der vorgehenden Ansprüche, **dadurch gekennzeichnet, dass** der obere Teil des Rohres (2) ausgeweitet ist, um das Anbringen an dieser Stelle einer Luftschraube (14) und/oder einer Brüste (17) zu ermöglichen, und bei der ein Zentralkern (16) in dem besagten ausgeweiteten Teil angeordnet ist, der eine Trennung des Gasstroms ohne Durchflussmengenverlust ermöglicht.

11. Vorrichtung zum Mischen von Flüssigkeit und Gas, die ein Sicherheitsventil bildet, nach einem der vorgehenden Ansprüche, **dadurch gekennzeichnet, dass** sie Mittel umfasst, um das besagte Gleitrohr (2) zurück zum Boden des besagten Behälters (4) zu bringen.

12. Vorrichtung zum Mischen von Flüssigkeit und Gas, die ein Sicherheitsventil bildet, nach einem der vorgehenden Ansprüche, **dadurch gekennzeichnet, dass** sie Einstellmittel umfasst, die geeignet vorgesehen sind, um Löcher (22) variierbar zu schließen, die das besagte Gleitrohr (2) in seinem unteren Teil und oberhalb des besagten Schwimmers (8) umfasst.

13. Vorrichtung zum Mischen von Flüssigkeit und Gas, die ein Sicherheitsventil bildet, nach einem der vorgehenden Ansprüche, **dadurch gekennzeichnet, dass** die besagte Mischkammer (6) geeignet vorgesehen ist, um mit dem besagten Auslass (7) zusammenzuwirken, um den Gasdurchgang zu verhindern.

14. Vorrichtung zum Mischen von Flüssigkeit und Gas, die ein Sicherheitsventil bildet, nach einem der vorgehenden Ansprüche, **dadurch gekennzeichnet, dass** die besagte Mischkammer (6) geeignet vorgesehen ist, um mit dem besagten Gleitrohr (2) zusammenzuwirken, um den Gasdurchgang zu verhindern.

15. Vorrichtung zum Mischen von Flüssigkeit und Gas, die ein Sicherheitsventil bildet, nach einem der vorgehenden Ansprüche, **dadurch gekennzeichnet, dass** die besagte Mischkammer (6) regenschirmförmig ist.

16. Vorrichtung zum Mischen von Flüssigkeit und Gas, die ein Sicherheitsventil bildet, nach einem der vorgehenden Ansprüche, **dadurch gekennzeichnet, dass** der besagte Auslass (7) aus einer Düse besteht.

17. Gasreinigungsanlage, umfassend zwischen einer stromaufwärtsen Leitung und einer stromabwärtsen Leitung einen Flüssigkeitsbehälter, und wenigstens eine Vorrichtung zum Mischen von Flüssigkeit und Gas nach irgendeinem der Anspruche 1 bis 16.

18. Staubsauger mit Wasserfilterung, umfassend Mittel, um einen Luftstrom zu erzeugen, und umfassend zwischen einer stromaufwärtsen Leitung und einer stromabwärtsen Leitung einen Wasserbehälter, und wenigstens eine Vorrichtung zum Mischen von Flüssigkeit und Gas nach irgendeinem der Anspruche 1 bis 16.
